# EUROPEAN PATENT SPECIFICATION

(11) **EP 3 074 992 B1**
(45) Date of publication and mention of the grant of the patent: **17.02.2021**
(21) Application number: 14802564.6
(22) Date of filing: 06.11.2014
(51) Int. Cl.: H01G 4/30, H01G 4/012, H01G 4/12

(54) **APPARATUS WITH MULTILAYER CERAMIC CAPACITOR COMPRISING SLOTTED ELECTRODES AND CORRESPONDING METHOD**
VORRICHTUNG UMFASSEND KERAMISCHEN MEHRSCHICHTKONDENSATOR MIT GESCHLITZTEN INNENELEKTRODEN UND VERFAHREN DAFÜR
DISPOSITIF AVEC CONDENSATEUR CÉRAMIQUE MULTICOUCHE COMPRENANT DES ÉLECTRODES À ENCOCHES ET PROCÉDÉ CORRESPONDANT

(30) Priority: 26.11.2013 US 201314090589
(43) Date of publication of application: 05.10.2016
(73) Proprietor: Qualcomm Incorporated, San Diego, CA 92121-1714 (US)
(72) Inventor: YUN, Changhan Hobie, San Diego, CA 92121-1714 (US); HWANG, Kyu-Pyung, San Diego, CA 92121-1714 (US); SONG, Young Kyu, San Diego, CA 92121-1714 (US); KIM, Dong Wook, San Diego, CA 92121-1714 (US)
(74) Representative: Dunlop, Hugh Christopher
(86) International application number: PCT/US2014/064290
(87) International publication number: WO 2015/080847

(56) References cited:
- EP-A1- 1 075 004
- JP-A- H08 191 034
- US-A- 5 099 387
- US-A1- 2008 310 076
- US-A1- 2013 027 841

## Description

### FIELD

The present disclosure is generally related to a multilayer ceramic capacitor (MLCC).

### DESCRIPTION OF RELATED ART

Advances in technology have resulted in smaller and more powerful computing devices. For example, there currently exist a variety of portable personal computing devices, including wireless computing devices, such as portable wireless telephones, personal digital assistants (PDAs), and paging devices that are small, lightweight, and easily carried by users. More specifically, portable wireless telephones, such as cellular telephones and Internet protocol (IP) telephones, can communicate voice and data packets over wireless networks. Further, many such wireless telephones include other types of devices that are incorporated therein. For example, a wireless telephone can also include a digital still camera, a digital video camera, a digital recorder, and an audio file player. Also, such wireless telephones can process executable instructions, including software applications, such as a web browser application, that can be used to access the Internet. As such, these wireless telephones can include significant computing capabilities.

Electronic devices, such as wireless telephones, may include various circuit elements, such as resistors, capacitors, transistors, inductors, etc. One type of capacitor that may be included in electronic devices is the multilayer ceramic capacitor (MLCC). MLCCs include conductive plates that are interleaved with insulating layers. To determine the impedance of a MLCC, the MLCC can be modeled as an RLC circuit. The R (resistor) portion of the circuit contributes a "real" portion of the impedance based on an equivalent series resistance (ESR) of the MLCC. The LC portion of the circuit contributes an "imaginary" portion of the impedance based on an equivalent series inductance (ESL) and a capacitance of the MLCC.

The MLCC may be associated with a quality factor ("Q factor") that is based on a ratio of the "imaginary" portion of the impedance to the "real portion" of the impedance. Thus, the Q factor of the MLCC may be inversely proportional to ESR, and one way to increase the Q factor of a MLCC is to reduce the ESR of the MLCC.

JP H08 191034 A describes a laminated capacitor with an element assembly comprising dielectric layers and inner electrodes alternately laminated, a pair of outer electrodes connecting inner electrodes on both parts of the element assembly alternately or in parallel with each other and the inner electrodes having one or exceeding two each of inner electrode pieces while both edge parts of the inner electrode pieces are almost in parallel with each other, also the side edge parts of the inner electrode pieces of the inner electrodes adjacent through the intermediary of the dielectric layer are almost in parallel with each other but opposite to each other at least exceeding two positions.

US 2013/027841 A1 describes a multi-layered ceramic capacitor including: a laminated body having a plurality of dielectric layers laminated therein and including first and second surfaces opposed to each other; a first internal electrode formed between the plurality of dielectric layers, exposed to the first surface, and including a plurality of first sub-electrodes; a second internal electrode exposed to the second surface and including a plurality of second sub-electrodes alternately disposed with the first sub-electrodes; a third internal electrode having at least one dielectric layer disposed between the first and second internal electrodes and the third internal electrode, exposed to the second surface, and including a plurality of third sub-electrodes disposed to be opposed to the first sub-electrodes; and a fourth internal electrode exposed to the first surface and including a plurality of fourth sub-electrodes opposed to the second sub-electrodes and alternately disposed with the third sub-electrodes.

EP 1 075 004 A1 describes a capacitor employed in a MMIC. A substantial comb-type lower electrode is formed on a substrate, then a dielectric layer is formed on the lower electrode, and then a substantial comb-type upper electrode is formed on the dielectric layer. Respective element electrodes of one of the lower electrode and the upper electrode are arranged in blank areas between respective element electrodes of the other of the lower electrode and the upper electrode.

US 5 099 387 A describes a multilayer capacitor in which a plurality of inner electrodes are arranged so as to be overlapped with each other while being separated by dielectric layers, at least one of the inner electrodes being provided with a slit extending in the direction of a current flowing in the inner electrode and having a width which is two times or more as large as the thickness of the dielectric layer which is in contact with the inner electrode.

US 2008/310076 A1 describes controlled equivalent series resistance decoupling capacitor designs having broad applicability to signal and power filtering technologies. Such capacitor designs provide characteristics for use in decoupling applications involving both signal level and power level environments. Controlled equivalent series resistance is provided by providing extended length tab connections to active electrode layers within the device.

### SUMMARY

In accordance with the invention an apparatus comprising a two-terminal multilayer ceramic capacitor and a method corresponding to the two-terminal multilayer ceramic capacitor are provided as set forth in the claims.

### BRIEF DESCRIPTION OF THE DRAWINGS

FIG. 1 is a diagram to illustrate a perspective view of an example of a two-terminal multilayer ceramic capacitor (MLCC) that includes at least one conductive layer having at least one slot;
FIG. 2 is a diagram to illustrate a package view of the MLCC of FIG. 1;
FIG. 3 is a diagram to illustrate an exploded view of the MLCC of FIG. 1;
FIG. 4 is a diagram to illustrate a top-down view of a conductive layer of the MLCC of FIG. 1;
FIG. 5 is a current flow density diagram of a conductive layer of the MLCC of FIG. 1;
FIG. 6 is a diagram to illustrate a perspective view of another particular example of a two-terminal MLCC that includes at least one conductive layer having at least one slot;
FIG. 7 is a diagram to illustrate an exploded view of the MLCC of FIG. 6;
FIG. 8 is diagram to illustrate a top-down view of a conductive layer of a two-terminal MLCC according to the invention;
FIG. 9 is a graph to illustrate impedance curves of two-terminal MLCCs that include at least one conductive layer having at least one slot;
FIG. 10 is a flowchart to illustrate a particular example of a method of forming a two-terminal MLCC that includes at least one conductive layer having at least one slot;
FIG. 11 is a block diagram of a wireless device including a two-terminal MLCC that includes at least one conductive layer having at least one slot; and
FIG. 12 is a data flow diagram of a particular illustrative example of a manufacturing process to manufacture electronic devices that include a two-terminal MLCC that includes at least one conductive layer having at least one slot.

### DETAILED DESCRIPTION

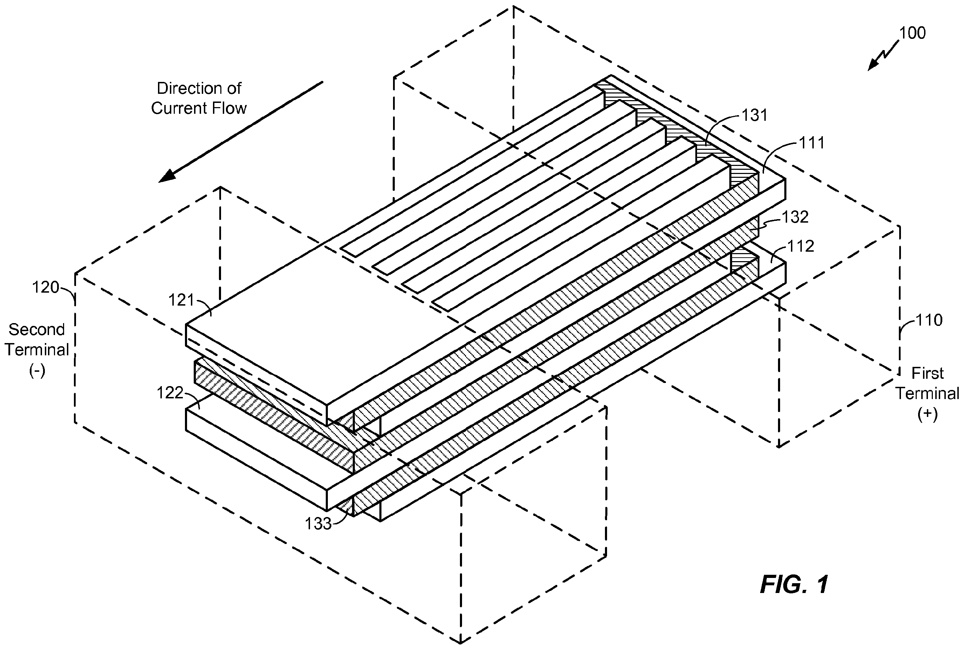

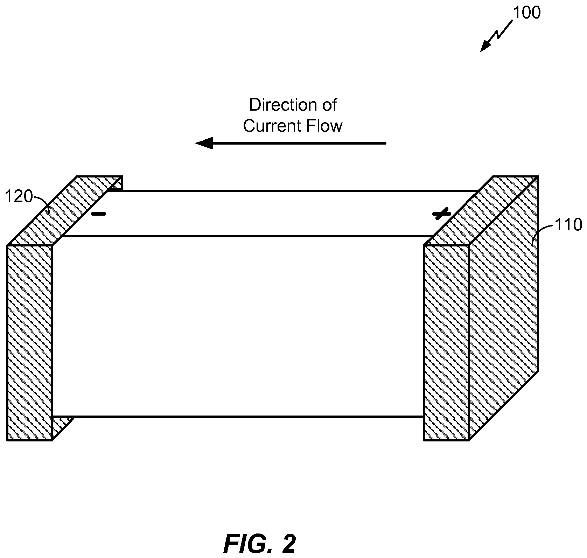

A first particular illustrative example of a two-terminal multilayer ceramic capacitor (MLCC) 100 is described with reference to FIGs. 1-5. The two-terminal MLCC 100 includes a first terminal 110 (e.g., a positive (+) terminal) and a second terminal 120 (e.g., a negative (-) terminal). Current flow direction in the MLCC may be from the first terminal 110 to the second terminal 120, as shown. A package view of the two-terminal MLCC 100 is shown in FIG. 2 (e.g., the two-terminal MLCC 100 may be packaged as shown in FIG. 2 and available as an off-the-shelf component for inclusion in electronic circuits and devices).

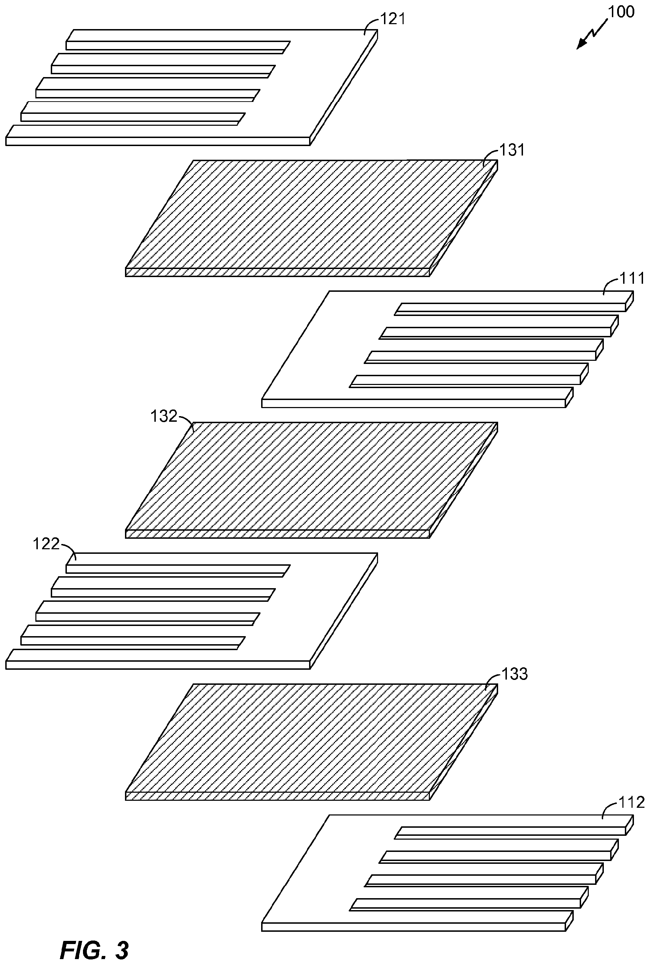

The two-terminal MLCC 100 may include multiple conductive layers (e.g., nickel or copper plates) that form the first terminal 110 and the second terminal 120. For example, a first set of conductive layers may form the first terminal 110. In FIG. 1, the first set of conductive layers includes conductive layers 111 and 112. A second set of conductive layers may form the second terminal 120. In FIG. 1, the second set of conductive layers includes conductive layers 121 and 122. Conductive layers from the first set and the second set may be interleaved, and each pair of conductive layers may be separated by an insulating layer. In FIG. 1, insulating (e.g., dielectric ceramic) layers 131, 132, and 133 separate the conductive layers 111, 112, 121, and 122, and are shown using a hatching pattern. As further illustrated in FIG. 3, from top to bottom, the order of layers in the two-terminal MLCC 100 is the conductive layer 121, the insulating layer 131, the conductive layer 111, the insulating layer 132, the conductive layer 122, the insulating layer 133, and the conductive layer 112.

It should be noted that the number and relative dimensions of the various layers shown in the figures are for example only. In alternate examples, a two-terminal MLCC may have a different number of layers and layers of different sizes (e.g., layers of one terminal may be differently sized than layers of the other terminal and/or the insulating layers). In one example, a two-terminal MLCC may include between 20 and 100 conductive layers, where each conductive layer is approximately 500 micrometers (µm) wide and 7 to 10 µm thick. As used herein, two quantities may be "approximately" equal if the two quantities are within a measurement error interval, a process error interval, or a tolerance level (e.g. a particular percentage, such as 2%, or a particular amount, such as 3 µm).

A capacitor, such as the two-terminal MLCC 100, can be modeled as a RLC circuit that includes a resistor (R), an inductor (L), and a capacitor (C) connected in series. The impedance (Z) of the capacitor is a complex quantity that includes a real portion and an imaginary portion. The real portion of Z is based on an equivalent series resistance (ESR) of the RLC circuit, and the imaginary portion of Z is based on an equivalent series inductance (ESL) and a capacitance of the RLC circuit. A quality factor (Q factor) of a MLCC may represent a ratio of energy stored (without loss) in the MLCC to energy dissipated by the MLCC. Higher Q factor is indicative of better capacitor performance. The Q factor of a MLCC may be approximated by the ratio of the imaginary portion of Z to the real portion of Z, because the inductor and capacitor of the RLC circuit can be considered energy storing elements whereas the resistor of the RLC circuit can be considered an energy dissipating element. Thus, Q factor may be considered to be inversely proportional to ESR, and one way to improve Q factor of a MLCC is to decrease ESR of the MLCC.

In an alternating current (AC) circuit, the ESR of a MLCC is primarily AC resistance (ACR). ACR may increase relative to direct current resistance (DCR) because of skin effect. Skin effect, which may be more pronounced at higher AC frequencies, is a physical phenomenon that causes most of the current flowing through a conductor (e.g., a conductive layer of a MLCC) to be concentrated near the surfaces of the conductor instead of being evenly distributed throughout the entire cross sectional area of the conductor. This loss of conducting area results in an increase in ACR, and therefore decreases the Q factor.

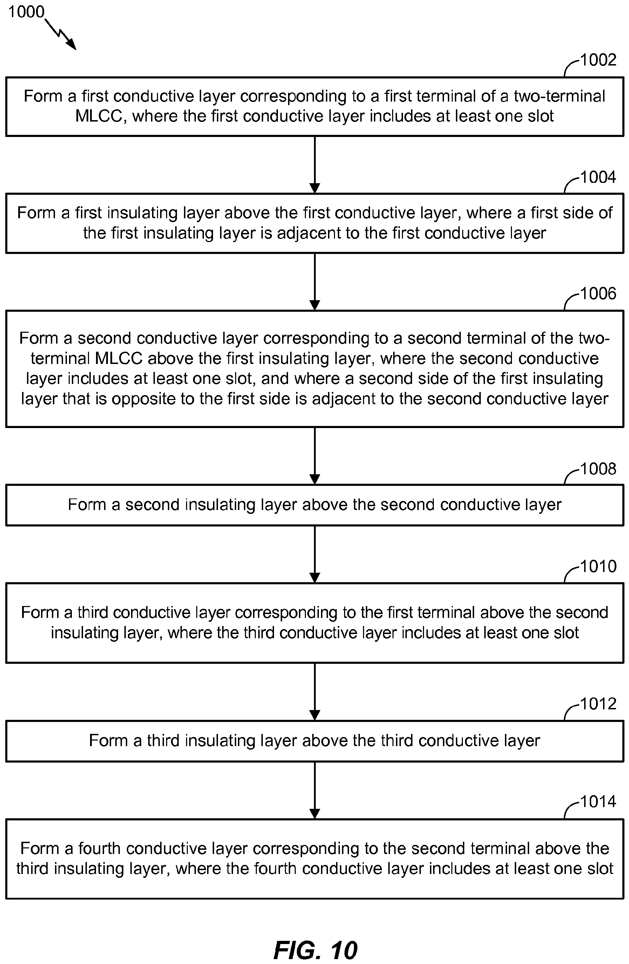

To decrease the ACR of the two-terminal MLCC 100, one or more of the conductive layers 111-112 and 121-122 is cut to form at least one non-conductive slot (also referred to as a "channel" or a "hole"). As used herein, a "non-conductive" slot is a slot that is substantially non-conductive. Even though cutting slot(s) into a conductive layer decreases the overall area/volume of the conductive layer, the slot(s) result in an increase in surface regions, which results in a decrease in ACR (and thus ESR) and an increase in the Q factor of the two-terminal MLCC 100. In a particular example, as shown in FIG. 1, four slots may be cut in the conductive layer 121 parallel to the current flow direction. This pattern may be referred to as a "five finger" pattern. A process by which slots may be cut into a conductive layer and by which a two-terminal MLCC may be formed is further described with reference to FIG. 10.

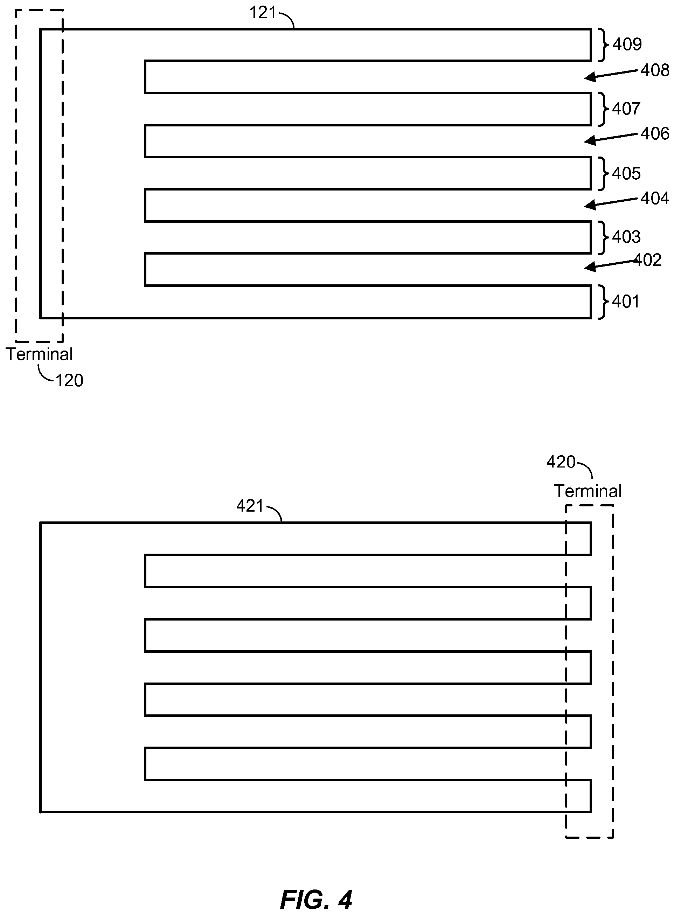

As shown in FIG. 3, the remaining conductive layers 111, 122, and 112 also have slots cut in the "five finger" pattern. FIG. 4 illustrates a top-down view of the conductive layer 121. As shown in FIG. 4, the conductive layer 121 includes slots 402, 404, 406, and 408 that separate the "finger" portions 401, 403, 405, 407, and 409. Each of the slots 402, 404, 406, and 408 is cut across less than an entirety of a length of the conductive layer 121. For example, a first (e.g., right-hand) end of the slot 402 coincides with a first (e.g., right-hand) end of the conductive layer 121. A second (e.g., left-hand) end of the slot 402 that is opposite the first end of the slot 402 does not coincide with a second (e.g., left-hand) end of the conductive layer 121 that is opposite the first end of the conductive layer 121. In the conductive layer 121, the "fingers" extend away from the associated terminal 120. In an alternate example, the "fingers" may extend towards the associated terminal. For example, in conductive layer 421, the "fingers" extend towards associated terminal 420.

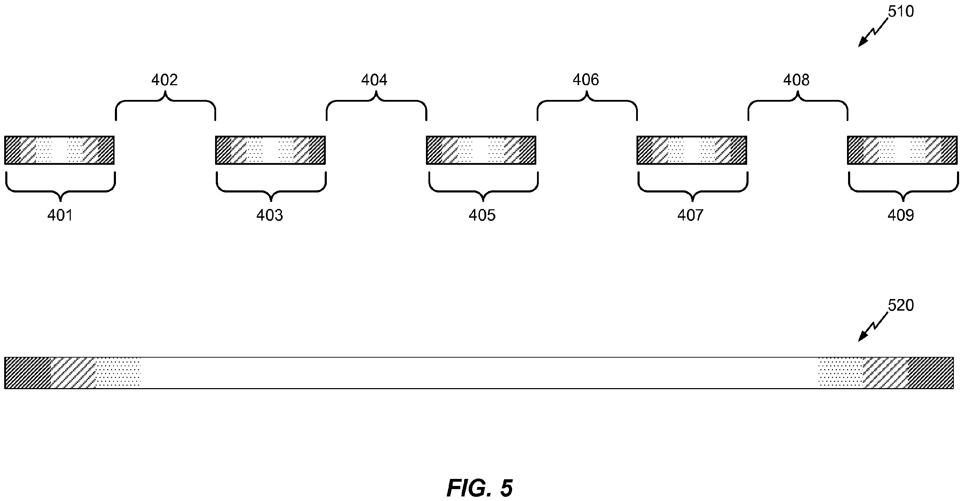

FIG. 5 illustrates a current flow density diagram 510 for the conductive layer 121 when current flows through the two-terminal MLCC 100. In FIG. 5, higher current flow density is indicated by denser shading patterns. As shown in FIG. 5, current flows primarily near the top, bottom, left, and right surfaces of each of the "finger" portions 401, 403, 405, 407, and 409. For purposes of comparison, FIG. 5 also illustrates a current flow density diagram 520 for the conductive layer 121 if no slots are cut.

It will thus be appreciated that by cutting slots into conductive layers of a two-terminal MLCC, larger cross sectional areas of the conductive layers conduct current, which results in a decrease in ACR (and thus ESR) and an increase in Q factor. The two-terminal MLCC 100 illustrated in FIGs. 1-5 may thus provide improved performance (e.g., higher Q factor) as compared to a MLCC that does not include any conductive layers having slots. The improved Q factor indicates less insertion loss associated with the capacitor, which may lead to decreased power consumption and dissipation (e.g., improved battery life) in an electronic device. Because the MLCC 100 has an increased Q factor, the MLCC 100 may achieve a desired capacitance while maintaining a smaller size than a MLCC that has a lower Q factor. Thus, for a particular Q factor, the described techniques may enable use of a smaller (e.g., less chip area and/or volume) MLCC, and for a particular area/volume MLCC, the described techniques may provide higher Q factor. It will therefore be appreciated that the described techniques may enable design of smaller circuits/chipsets/packages with higher capacitor Q factor.

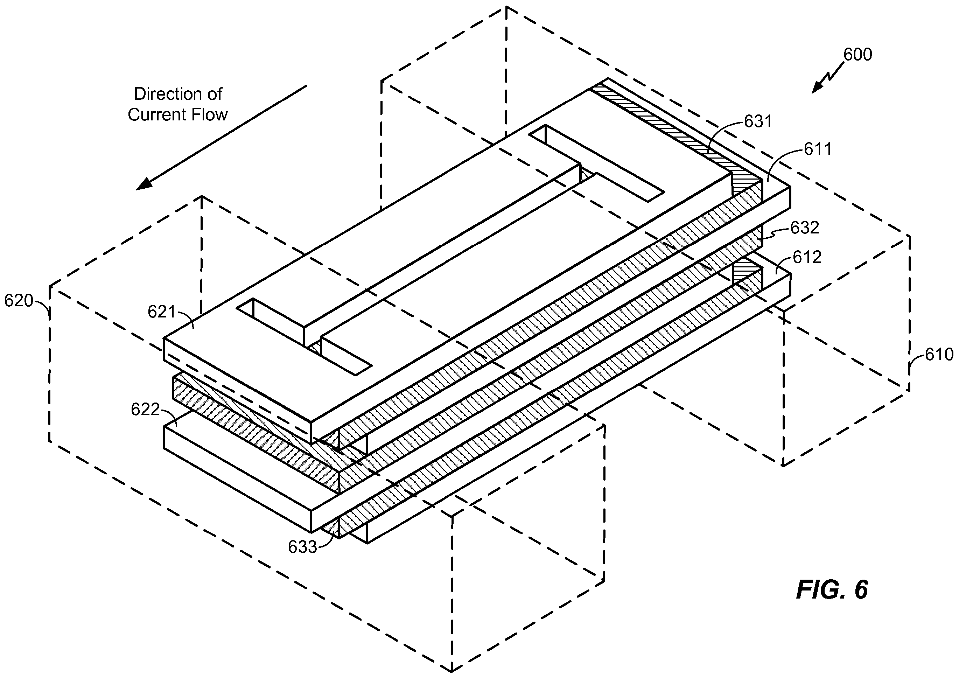

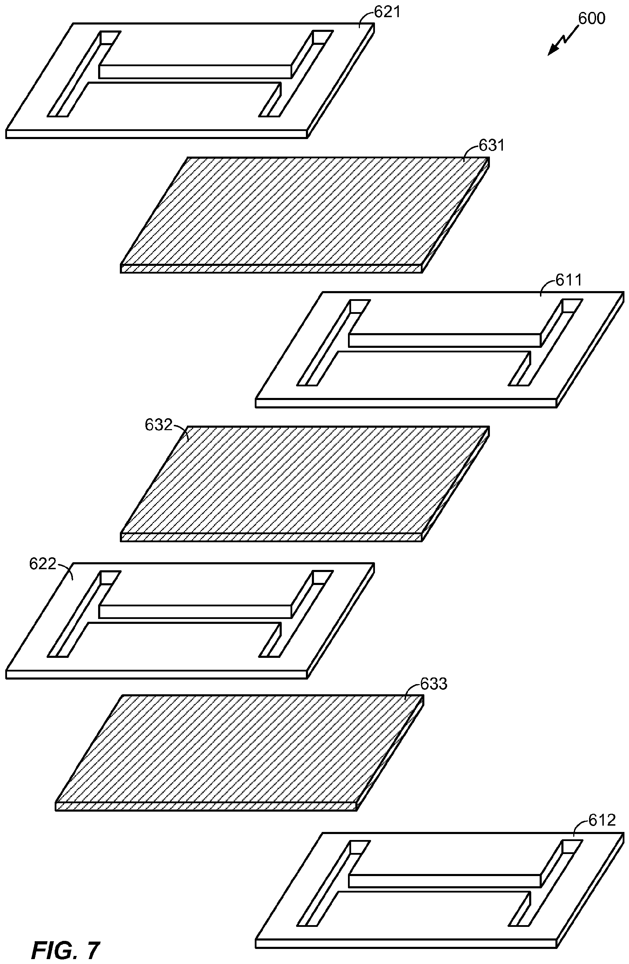

In the MLCC 100 of FIGs. 1-5, each of the slots is cut parallel to the current flow direction of the MLCC 100. Alternatively, slots may be cut in other directions in addition to, or instead of, parallel to the current flow direction. For example, FIGs. 6-7 illustrate an illustrative example of a two-terminal MLCC 600. The MLCC 600 includes a first terminal 610 and a second terminal 620. Conductive layers 611 and 612 are associated with the first terminal 610, and conductive layers 621 and 622 are associated with the second terminal 620. The MLCC 600 also includes insulating layers 631, 632, and 633, as shown.

In the MLCC 600, each conductive layer 611-612 and 621-622 includes a plurality of first slots that are perpendicular to the current flow direction and at least one second slot that is parallel to the current flow direction. The second (parallel) slot connects a pair of the first (perpendicular) slots, forming a "dog bone" pattern. In a particular embodiment, the "dog bone" pattern of FIGs. 6-7 may be used instead of the "five finger" pattern of FIGs. 1-5. The "dog bone" pattern may not reduce the capacitive surface area of conductive layers of the MLCC 600 as much as the "five finger" pattern reduces the capacitive surface area of the conductive layers of the MLCC 100. Because the "dog bone" pattern reduces the capacitive surface area of the conductive layers by a smaller amount than the "five finger" pattern, the MLCC 600 may have a higher capacitance than the MLCC 100.

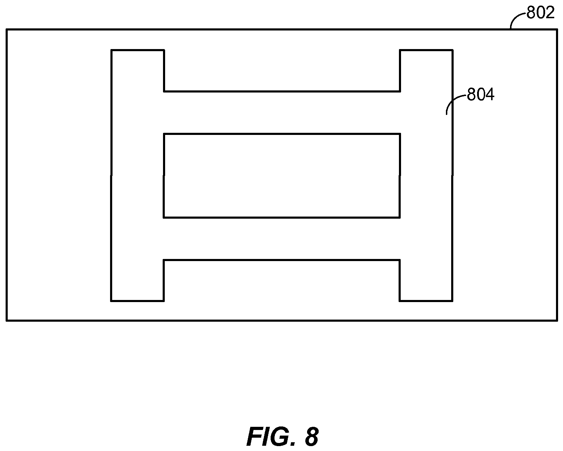

According to the invention, multiple "dog bone" patterns may be cut from a conductive layer of a MLCC. For example, FIG. 8 illustrates a "2 dog bone" slot pattern 804 according to the invention cut from a conductive layer 802. In accordance with the described techniques, one or more slots may be cut into a conductive layer of a two-terminal MLCC in various patterns. In a particular embodiment, different patterns may be simulated using simulation software executing on a computing device, and a particular pattern may be selected as having a desired combination of characteristics (capacitance, ESR, Q factor, size, complexity, cost, etc.).

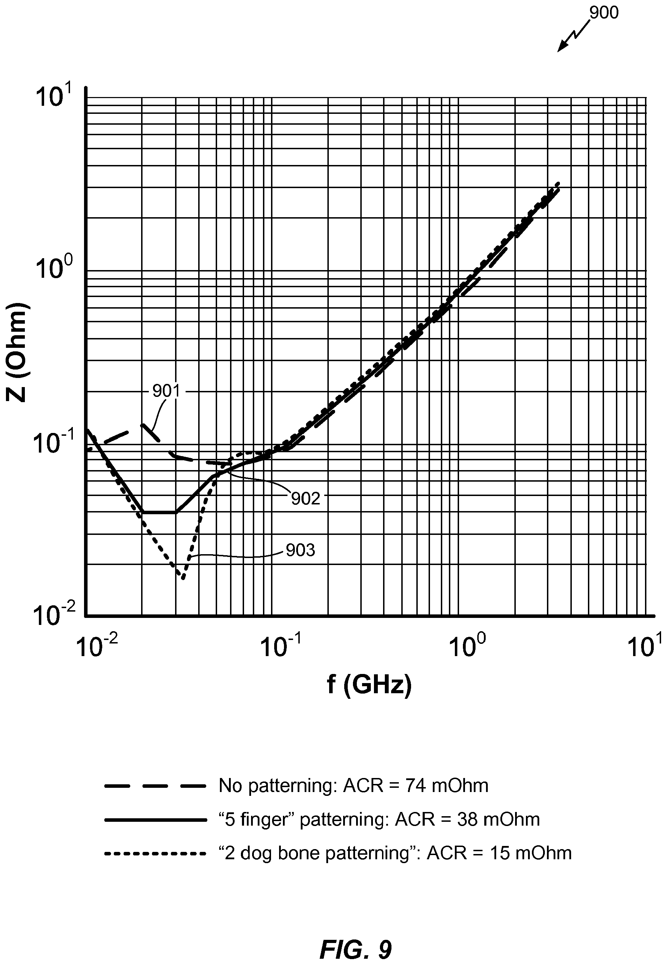

FIG. 9 is a graph 900 to illustrate impedance curves of two-terminal MLCCs that include at least one conductive layer having at least one slot. In the graph 900, impedance (Z) is plotted on the y-axis in Ohms and operating frequency is plotted on the x-axis in gigahertz (GHz). The graph 900 includes three curves. A first curve 901, illustrated using a large broken line, corresponds to a two-terminal MLCC that does not include any slots (e.g., corresponding to current flow density diagram 520 of FIG. 5). A second curve 902, illustrated using a solid line, corresponds to the "five finger" slot pattern of FIGs. 1-5. A third curve 903, illustrated using a small broken line, corresponds to the "2 dog bone" pattern of FIG. 8 according to the invention.

At the lowest point on each of the impedance curves 901-903 (e.g., the "valley"), the real portion of the impedance (i.e. ESR, which is primarily ACR) is dominant. Therefore, the lowest point on each of the curves 901-903 can be compared to compare ACR. In the embodiment of FIG. 9, the two-terminal MLCC having no slot pattern has an ACR of 74 milliohms. The "five finger" MLCC has an ACR of 38 milliohms. The "2 dog bone" MLCC has an ACR of 15 milliohm. Thus, because Q factor is roughly inversely proportional to ACR, the "five finger" pattern results in almost a 2X improvement in Q factor and the "2 dog bone" pattern according to the invention results in almost a 5X improvement in Q factor.

It should be noted that in the described two-terminal MLCC, one or more slots are cut into conductive layers to decrease ESR. Thus, with respect to the impedance curves shown in FIG. 9, the described techniques may be directed to making the "valley" in an impedance curve as deep as possible. In the described two-terminal MLCC, current enters a particular side of each conductive layer of a particular terminal from a particular direction and exits the conductive layer in an opposite direction from an opposite side. The described two-terminal MLCC is distinguished from MLCCs in which one or more slots may be cut to affect current directionality. For example, in a multi-terminal MLCC, slots may be cut to route current through each conductive layer to each terminal in a winding fashion to increase ESL of the MLCC. In such MLCCs, because current is made to travel a longer length, ESR is increased, not decreased, which may lead to a decrease in Q factor. In terms of the graphs shown in FIG. 9, such techniques may be directed to shifting the "valley" of the impedance curve along the x-axis, instead of deepening the "valley" along the y-axis.

Referring to FIG. 10, a flowchart of a particular exemplary method 1000 of forming a MLCC that includes at least one conductive layer having at least one slot is shown.

The method 1000 includes forming a first conductive layer corresponding to a first terminal of a two-terminal MLCC, at 1002. The first conductive layer includes at least one slot. For example, referring to FIG. 1, the conductive layer 112 corresponding to the first terminal 110 may be formed. Conductive layers of a MLCC may be formed using a metal layer screen printing process and a slot pattern (e.g., the "five finger" slot pattern of FIGs. 1-5, the "dog bone" pattern of FIGs. 6-7, the "2 dog bone" pattern of FIG. 8, or another slot pattern) may be used during the process. The metal layer screen printing process may use a metal ink (e.g., copper electrode ink). Conductive layers of the two-terminal MLCC are formed using a common pattern (e.g., screen printing pattern). In particular, a slot may be cut out of a conductive layer by "punching" the slot out of the conductive layer using a cutting tool. Alternatively, the slot may be "formed" by refraining from depositing metal electrode ink in a region corresponding to the slot.

The method 1000 also includes forming a first insulating layer above the first conductive layer, at 1004. A first side of the first insulating layer is adjacent to the first conductive layer. For example, referring to FIG. 1, the insulating layer 133 may be formed on the conductive layer 112 such that a bottom of the insulating layer 133 is adjacent to the conductive layer 112. In a particular embodiment, insulating layers of a MLCC may be formed using wet etching, dry etching, deposition, planarization, lithography or another process. In one example, the insulating layer may be formed by depositing a ceramic slurry (e.g., a material formed by combining ceramic powder and binding agent(s)).

The method 1000 further includes forming a second conductive layer corresponding to a second terminal of the two-terminal MLCC above the first insulating layer, at 1006. The second conductive layer includes at least one slot, and a second side of the first insulating layer that is opposite to the first side is adjacent to the second conductive layer. For example, referring to FIG. 1, the conductive layer 122 corresponding to the second terminal 120 may be formed on top of the insulating layer 133 such that the top of the insulating layer 133 is adjacent to the conductive layer 122.

The method 1000 includes forming a second insulating layer above the second conductive layer, at 1008, and forming a third conductive layer corresponding to the first terminal above the second insulating layer, at 1010. The third conductive layer includes at least one slot. For example, referring to FIG. 1, the insulating layer 132 and the conductive layer 111 may be formed.

The method 1000 also includes forming a third insulating layer above the third conductive layer, at 1012, and forming a fourth conductive layer corresponding to the second terminal above the third insulating layer, at 1014. The fourth conductive layer includes at least one slot. For example, referring to FIG. 1, the insulating layer 131 and the conductive layer 121 may be formed.

In a particular example, after the conductive and insulating layers of the MLCC are formed, the layers may be pressed (e.g., by a laminating/pressing machine) to fuse the layers together. The resulting MLCC structure may be fired (e.g., baked) in an oven or a kiln. Electrical connections or caps may then be added to the MLCC. In particular embodiments, forming a MLCC may involve a high-temperature co-fired ceramic (HTCC) process and/or a low-temperature co-fired ceramic (LTCC) process.

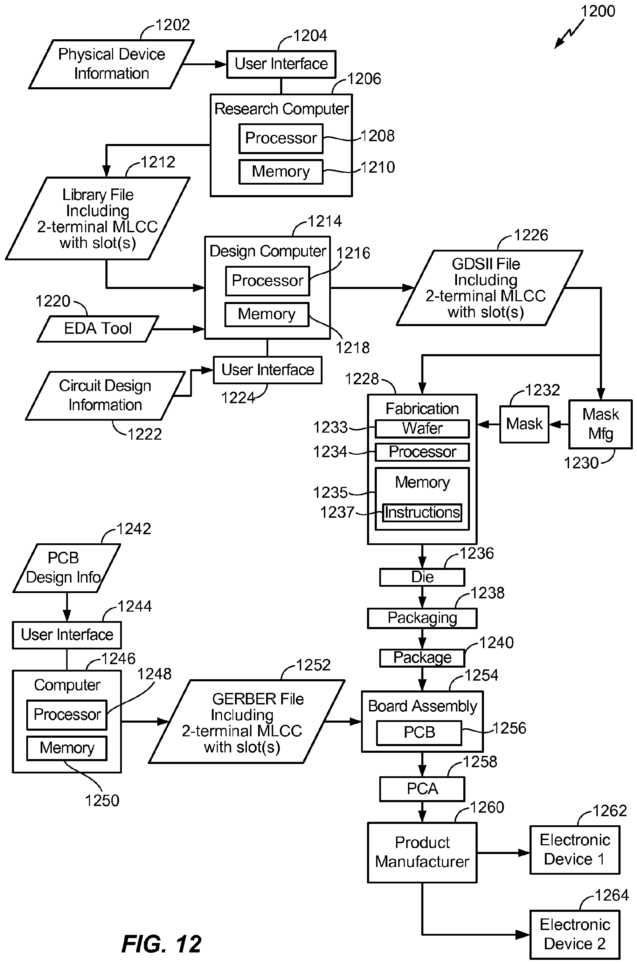

In a particular example, the method 1000 of FIG. 10 may be initiated by a processing unit such as a central processing unit (CPU), a field-programmable gate array (FPGA) device, an application-specific integrated circuit (ASIC), a controller, another hardware device, firmware device, or any combination thereof. As an example, the method 1000 of FIG. 10 can be initiated and controlled by fabrication equipment, such as a processor within or coupled to fabrication equipment and that executes instructions stored at a memory (e.g., a non-transitory computer-readable medium), as described further with reference to FIG. 12. Manufacturing processes, such as screen printing, wet etching, dry etching, deposition, planarization, lithography, or a combination thereof, may be used by fabrication equipment to fabricate MLCCs described herein.

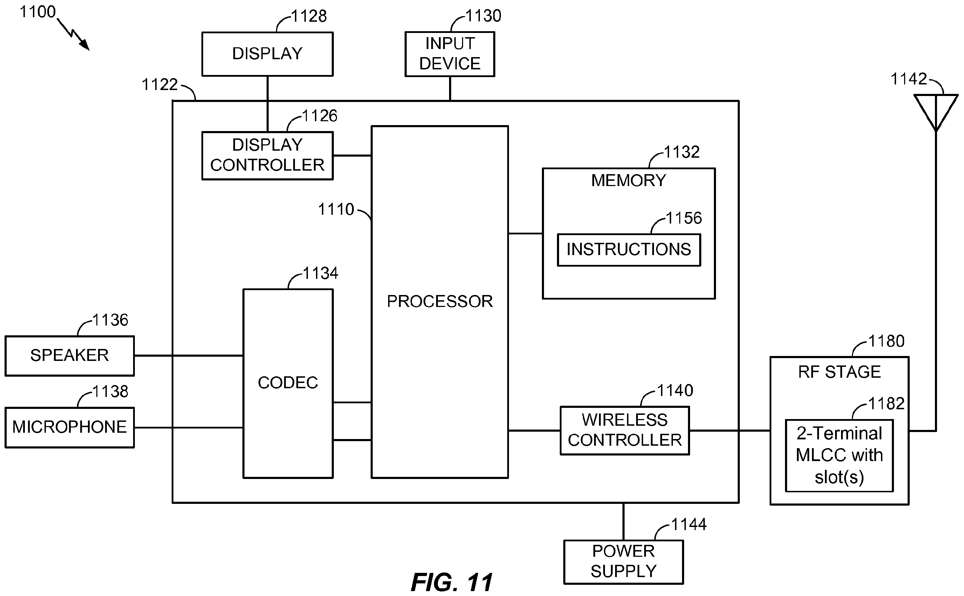

Referring to FIG. 11, a block diagram of a wireless device 1100 is shown. The wireless device 1100 includes a processor 1110, such as a digital signal processor (DSP) or a central processing unit (CPU), coupled to a memory 1132. FIG. 11 also shows a display controller 1126 that is coupled to the processor 1110 and to a display 1128. A coder/decoder (CODEC) 1134 can also be coupled to the processor 1110. A speaker 1136 and a microphone 1138 can be coupled to the CODEC 1134.

FIG. 11 further indicates that a wireless controller 1140 can be coupled to the processor 1110 and to an antenna 1142 via a radio-frequency (RF) stage 1180 disposed between the wireless controller 1140 and the antenna 1142. In a particular embodiment, the RF stage 1180 includes a two-terminal MLCC 1182, where the two-terminal MLCC 1182 includes at least one slot. For example, the two-terminal MLCC 1182 may be the two-terminal MLCC 100 of FIGs. 1-5, the two-terminal MLCC 600 of FIGs. 6-7, a two-terminal MLCC that includes slots based on the "2 dog bone" pattern of FIG. 8, etc., and may be formed according to the method 1000 of FIG. 10. In a particular embodiment, the two-terminal MLCC 1182 is included in an inductor (L) capacitor (C) voltage controlled oscillator (LC-VCO), an LC-based filter, an LC tank, an LC network, a matching circuit, and/or another component of the RF stage 1180.

The memory 1132 may be a tangible non-transitory processor-readable storage medium that includes executable instructions 1156. The instructions 1156 may be executed by a processor, such as the processor 1110, to perform or initiate performance of one or more of operations, functions, and/or methods related to operation of the wireless device 1100. In a particular embodiment, the processor 1110, the display controller 1126, the memory 1132, the CODEC 1134, and the wireless controller 1140 are included in a system-in-package or system-on-chip device 1122. In a particular embodiment, an input device 1130 and a power supply 1144 are coupled to the system-on-chip device 1122. Moreover, in a particular embodiment, as illustrated in FIG. 11, the display 1128, the input device 1130, the speaker 1136, the microphone 1138, the antenna 1142, and the power supply 1144 are external to the system-on-chip device 1122. However, each of the display 1128, the input device 1130, the speaker 1136, the microphone 1138, the antenna 1142, and the power supply 1144 can be coupled to a component of the system-on-chip device 722, such as an interface or a controller.

In further aspects of the disclosure useful for understanding the invention, an apparatus includes a two-terminal MLCC that includes first means for conducting, second means for conducting, and means for insulating. The first means for conducting corresponds to a first terminal of the two-terminal MLCC and includes at least one slot. For example, the first means for conducting may include the conductive layer 111, the conductive layer 112, the conductive layer 611, the conductive layer 612, or another conductive layer corresponding to a first terminal of a two-terminal MLCC. The second means for conducting corresponds to a second terminal of the two-terminal MLCC and includes at least one slot. For example, the second means for conducting may include the conductive layer 121, the conductive layer 122, the conductive layer 621, the conductive layer 622, or another conductive layer corresponding to a second terminal of a two-terminal MLCC. The means for insulating is disposed between the first means for conducting and the second means for conducting. For example, the means for insulating may include the insulating layer 131, the insulating layer 132, the insulating layer 133, the insulating layer 631, the insulating layer 632, the insulating layer 633, or another insulating layer disposed between two conductive layers of a two-terminal MLCC.

The foregoing disclosed devices and functionalities may be designed and configured into computer files (e.g. RTL, GDSII, GERBER, etc.) stored on computer-readable media. Some or all such files may be provided to fabrication handlers to fabricate devices based on such files. Resulting products include wafers that are then cut into dies and packaged into chips. The chips are then employed in devices including, but not limited to, a mobile phone, a communications device, a set top box, a music player, a video player, an entertainment unit, a navigation device, a personal digital assistant (PDA), a fixed location data unit, or a computer. FIG. 12 depicts a particular illustrative embodiment of an electronic device manufacturing process 1200.

Physical device information 1202 is received at the manufacturing process 1200, such as at a research computer 1206. The physical device information 1202 may include design information representing at least one physical property of an electronic device, such as a two-terminal MLCC including at least one conductive layer having at least one slot (e.g., corresponding to the two-terminal MLCC 100, 600, or 1182). For example, the physical device information 1202 may include physical parameters, material characteristics, and structure information that is entered via a user interface 1204 coupled to the research computer 1206 (e.g., conductive/insulating layer length/width/thickness, slot pattern, etc. may be entered into the research computer 1206). The research computer 1206 includes a processor 1208, such as one or more processing cores, coupled to a computer-readable medium such as a memory 1210. The memory 1210 may store computer-readable instructions that are executable to cause the processor 1208 to transform the physical device information 1202 to comply with a file format and to generate a library file 1212.

In a particular example, the library file 1212 includes at least one data file including the transformed design information. For example, the library file 1212 may include a library of electronic devices (e.g., semiconductor devices), including a two-terminal MLCC including at least one conductive layer having at least one slot (e.g., corresponding to the two-terminal MLCC 100, 600, or 1182), provided for use with an electronic design automation (EDA) tool 1220.

The library file 1212 may be used in conjunction with the EDA tool 1220 at a design computer 1214 including a processor 1216, such as one or more processing cores, coupled to a memory 1218. The EDA tool 1220 may be stored as processor executable instructions at the memory 1218 to enable a user of the design computer 1214 to design a circuit including a two-terminal MLCC including at least one conductive layer having at least one slot (e.g., corresponding to the two-terminal MLCC 100, 600, or 1182), using the library file 1212. For example, a user of the design computer 1214 may enter circuit design information 1222 via a user interface 1224 coupled to the design computer 1214. The circuit design information 1222 may include design information representing at least one physical property of an electronic device, such as a two-terminal MLCC including at least one conductive layer having at least one slot (e.g., corresponding to the two-terminal MLCC 100, 600, or 1182). To illustrate, the circuit design property may include identification of particular circuits and relationships to other elements in a circuit design, positioning information, feature size information, interconnection information, or other information representing a physical property of an electronic device.

The design computer 1214 may be configured to transform the design information, including the circuit design information 1222, to comply with a file format. To illustrate, the file formation may include a database binary file format representing planar geometric shapes, text labels, and other information about a circuit layout in a hierarchical format, such as a Graphic Data System (GDSII) file format. The design computer 1214 may be configured to generate a data file including the transformed design information, such as a GDSII file 1226 that includes information describing a two-terminal MLCC including at least one conductive layer having at least one slot (e.g., corresponding to the two-terminal MLCC 100, 600, or 1182), in addition to other circuits or information. To illustrate, the data file may include information corresponding to a system-on-chip (SOC) or a chip interposer component that that includes a two-terminal MLCC including at least one conductive layer having at least one slot (e.g., corresponding to the two-terminal MLCC 100, 600, or 1182), and that also includes additional electronic circuits and components within the SOC.

The GDSII file 1226 may be received at a fabrication process 1228 to manufacture a two-terminal MLCC including at least one conductive layer having at least one slot (e.g., corresponding to the two-terminal MLCC 100, 600, or 1182) according to transformed information in the GDSII file 1226. For example, a device manufacture process may include providing the GDSII file 1226 to a mask manufacturer 1230 to create one or more masks, such as masks to be used with photolithography processing, illustrated in FIG. 12 as a representative mask 1232. The mask 1232 may be used during the fabrication process to generate one or more wafers 1233, which may be tested and separated into dies, such as a representative die 1236. The die 1236 includes a circuit including two-terminal MLCC including at least one conductive layer having at least one slot (e.g., corresponding to the two-terminal MLCC 100, 600, or 1182).

The fabrication process 1228 may be initiated by or controlled by a processor 1234. The processor 1234 may access a memory 1235 that includes executable instructions 1237, such as computer-readable instructions or processor-readable instructions. The executable instructions may include one or more instructions that are executable by a computer, such as the processor 1234.

The fabrication process 1228 may be implemented by a fabrication system that is fully automated or partially automated. For example, the fabrication process 1228 may be automated and may perform processing steps according to a schedule. The fabrication system may include fabrication equipment (e.g., processing tools) to perform one or more operations to form an electronic device. For example, the fabrication equipment may be configured to form one or more conductive layers, to form one or more insulating layers, to form one or more electrical connections or vias, to perform one or more etches, to form one or more metal structures, and/or to form other circuit elements using manufacturing processes (e.g., screen printing, wet etching, dry etching, deposition, planarization, lithography, or a combination thereof). In a particular embodiment, a two-terminal MLCC fabricated by the fabrication process 1228 may be inserted into an integrated circuit, a printed circuit board (PCB), and/or an electronic device.

The fabrication system may have a distributed architecture (e.g., a hierarchy). For example, the fabrication system may include one or more processors, such as the processor 1234, one or more memories, such as the memory 1235, and/or controllers that are distributed according to the distributed architecture. The distributed architecture may include a high-level processor that controls and/or initiates operations of one or more low-level systems. For example, a high-level portion of the fabrication process 1228 may include one or more processors, such as the processor 1234, and the low-level systems may each include or may be controlled by one or more corresponding controllers. A particular controller of a particular low-level system may receive one or more instructions (e.g., commands) from a high-level system, may issue sub-commands to subordinate modules or process tools, and may communicate status data back to the high-level system. Each of the one or more low-level systems may be associated with one or more corresponding pieces of fabrication equipment (e.g., processing tools). In a particular embodiment, the fabrication system may include multiple processors that are distributed in the fabrication system. For example, a controller of a low-level system component of the fabrication system may include a processor, such as the processor 1234.

Alternatively, the processor 1234 may be a part of a high-level system, subsystem, or component of the fabrication system. In another embodiment, the processor 1234 includes distributed processing at various levels and components of a fabrication system.

Thus, the memory 1235 may include processor-executable instructions 1237 that, when executed by the processor 1234, cause the processor 1234 to initiate or control formation of a two-terminal MLCC that includes at least one conductive layer that includes at least one slot. For example, various layers may be formed by one or more deposition tools, such as screen printing tool, a deposition tool (e.g., a flowable chemical vapor deposition (FCVD) tool, a spin-on deposition tool, etc.), or another tool. Structures, such as MLCC layers, may be etched (e.g., cut) by one or more cutting devices, including but not limited to etching machines or etchers, such as a wet etcher, a dry etcher, or a plasma etcher.

As an illustrative example, the processor 1234 may control steps for forming a first conductive layer of a two-terminal MLCC, an insulating layer on the first conductive layer, and a second conductive layer on the insulating layer, where the first conductive layer and/or the second conductive layer include at least one slot. For example, the processor 1234 may be embedded in or coupled to one or more controllers that control one or more pieces of fabrication equipment to perform the steps. The processor 1234 may control the steps by executing the instructions 1237 to control (e.g., activate, deactivate, schedule, etc.) one or more other processes configured to form conductive layers and insulating layers. To illustrate, a first instruction or set of instructions may be executable to cause the processor 1234 to activate a process and associated machinery that operates to form a first conductive layer of a two-terminal MLCC, where the first conductive layer includes at least one slot. A second instruction or set of instructions may be executable to cause the processor 1234 to activate a process and associated machinery that operates to form an insulating layer on the first conductive layer. A third instruction or set of instructions may be executable to cause the processor 1234 to activate a process and associated machinery that operates to form a second conductive layer on the insulating layer. The second conductive layer may include at least one slot. In particular, manufacturing processes (e.g., screen printing, wet etching, dry etching, deposition, planarization, lithography, or a combination thereof) may be used to fabricate the two-terminal MLCC.

The die 1236 may be provided to a packaging process 1238 where the die 1236 is incorporated into a representative package 1240. For example, the package 1240 may include the single die 1236 or multiple dies, such as a system-in-package (SiP) arrangement. The package 1240 may be configured to conform to one or more standards or specifications, such as Joint Electron Device Engineering Council (JEDEC) standards.

Information regarding the package 1240 may be distributed to various product designers, such as by use of a component library stored at a computer 1246. The computer 1246 may include a processor 1248, such as one or more processing cores, coupled to a memory 1250. A printed circuit board (PCB) tool may be stored as processor executable instructions at the memory 1250 to process PCB design information 1242 received from a user of the computer 1246 via a user interface 1244. The PCB design information 1242 may include physical positioning information of a packaged electronic device on a circuit board, the packaged electronic device corresponding to the package 1240 including two-terminal MLCC including at least one conductive layer having at least one slot (e.g., corresponding to the two-terminal MLCC 100, 600, or 1182).

The computer 1246 may be configured to transform the PCB design information 1242 to generate a data file, such as a GERBER file 1252 with data that includes physical positioning information of a packaged electronic device on a circuit board, as well as layout of electrical connections such as traces and vias, where the packaged electronic device corresponds to the package 1240 including a two-terminal MLCC including at least one conductive layer having at least one slot (e.g., corresponding to the two-terminal MLCC 100, 600, or 1182). In other embodiments, the data file generated by the transformed PCB design information may have a format other than a GERBER format.

The GERBER file 1252 may be received at a board assembly process 1254 and used to create PCBs, such as a representative PCB 1256, manufactured in accordance with the design information stored within the GERBER file 1252. For example, the GERBER file 1252 may be uploaded to one or more machines to perform various steps of a PCB production process. The PCB 1256 may be populated with electronic components including the package 1240 to form a representative printed circuit assembly (PCA) 1258.

The PCA 1258 may be received at a product manufacturer 1260 and integrated into one or more electronic devices, such as a first representative electronic device 1262 and a second representative electronic device 1264. As an illustrative, non-limiting example, the first representative electronic device 1262, the second representative electronic device 1264, or both, may be selected from a set top box, a music player, a video player, an entertainment unit, a navigation device, a communications device, a personal digital assistant (PDA), a fixed location data unit, and a computer, into which a two-terminal MLCC including at least one conductive layer having at least one slot (e.g., corresponding to the two-terminal MLCC 100, 600, or 1182), is integrated. As another illustrative, non-limiting example, one or more of the electronic devices 1262 and 1264 may be remote units such as mobile phones, hand-held personal communication systems (PCS) units, portable data units such as personal data assistants, global positioning system (GPS) enabled devices, navigation devices, fixed location data units such as meter reading equipment, or any other device that stores or retrieves data or computer instructions, or any combination thereof. Embodiments of the disclosure may be suitably employed in any device which includes integrated circuitry including a capacitor. Embodiments of the disclosure may also be employed in non-integrated circuit based devices that include a capacitor.

A device that includes a two-terminal MLCC including at least one conductive layer having at least one slot (e.g., corresponding to the two-terminal MLCC 100, 600, or 1182) may be fabricated, processed, and incorporated into an electronic device, as described in the illustrative manufacturing process 1200. One or more aspects of the embodiments disclosed with respect to FIGs. 1-11 may be included at various processing stages, such as within the library file 1212, the GDSII file 1226, and the GERBER file 1252, as well as stored at the memory 1210 of the research computer 1206, the memory 1218 of the design computer 1214, the memory 1250 of the computer 1246, the memory of one or more other computers or processors (not shown) used at the various stages, such as at the board assembly process 1254, and also incorporated into one or more other physical embodiments such as the mask 1232, the die 1236, the package 1240, the PCA 1258, other products such as prototype circuits or devices (not shown), or any combination thereof. Although various representative stages are depicted with reference to FIGS. 1-11, in other embodiments fewer stages may be used or additional stages may be included. Similarly, the process 1200 of FIG. 12 may be performed by a single entity or by one or more entities performing various stages of the manufacturing process 1200.

Those of skill would further appreciate that the various illustrative logical blocks, configurations, modules, circuits, and algorithm steps described in connection with the embodiments disclosed herein may be implemented as electronic hardware, computer software executed by a processor, or combinations of both. Various illustrative components, blocks, configurations, modules, circuits, and steps have been described above generally in terms of their functionality. Whether such functionality is implemented as hardware or processor executable instructions depends upon the particular application and design constraints imposed on the overall system. Skilled artisans may implement the described functionality in varying ways for each particular application, but such implementation decisions should not be interpreted as causing a departure from the scope of the present disclosure.

The steps of a method or algorithm described in connection with the embodiments disclosed herein may be embodied directly in hardware, in a software module executed by a processor, or in a combination of the two. A software module may reside in random access memory (RAM), flash memory, read-only memory (ROM), programmable read-only memory (PROM), erasable programmable read-only memory (EPROM), electrically erasable programmable read-only memory (EEPROM), registers, hard disk, a removable disk, a compact disc read-only memory (CD-ROM), or any other form of non-transient storage medium known in the art. An exemplary storage medium is coupled to the processor such that the processor can read information from, and write information to, the storage medium. In the alternative, the storage medium may be integral to the processor. The processor and the storage medium may reside in an application-specific integrated circuit (ASIC). The ASIC may reside in a computing device or a user terminal. In the alternative, the processor and the storage medium may reside as discrete components in a computing device or user terminal.

## Claims

1. An apparatus comprising:
a two-terminal multilayer ceramic capacitor, MLCC (600), comprising:
at least one first conductive layer (611) associated with a first terminal (610);
at least one second conductive layer (621) associated with a second terminal (620); and
an insulating layer (631) separating a first conductive layer and a second conductive layer (621);
**characterised in that** the first conductive layers (611) and the second conductive layers (622) include a 2-dog-bone-pattern hole (804), wherein the 2-dog-bone-pattern hole (804) is formed by two first slots that are perpendicular to a current flow direction of the two-terminal MLCC, and two second slots parallel to the current flow direction, wherein the two second slots are arranged between the two first slots and their ends connecting the respective first slots.

2. The apparatus of claim 1, wherein the two-terminal MLCC (600) includes a single positive (610) terminal and a single negative terminal (620).

3. The apparatus of claim 1, wherein the 2-dog-bone-pattern hole (804) of the first conductive layer (611) decreases an equivalent series resistance, ESR, of the two-terminal MLCC (600) as compared to a conductive layer not including the 2-dog-bone-pattern hole (804).

4. The apparatus of claim 3, wherein the decrease in the ESR of the two-terminal MLCC (600) increases a quality factor, Q factor, of the two-terminal MLCC (600).

5. The apparatus of claim 1, wherein the 2-dog-bone-pattern hole (804) is cut across less than an entirety of a length of the conductive layer (611, 621).

6. A method comprising:
forming a first conductive layer corresponding to a first terminal of a two-terminal multilayer ceramic capacitor, MLCC (600), wherein the first conductive layer includes a 2-dog-bone-pattern hole (804) according to claim 1;
forming a first insulating layer (631) above the first conductive layer, wherein a first side of the first insulating layer (631) is adjacent to the first conductive layer;
forming a second conductive layer corresponding to a second terminal of the two-terminal MLCC (600) above the first insulating layer (631), wherein the second conductive layer includes a 2-dog-bone-pattern hole (804) according to claim 1, and wherein a second side of the first insulating layer (631) that is opposite to the first side is adjacent to the second conductive layer.

7. The method of claim 6, wherein the 2-dog-bone-pattern hole (804) of the first conductive layer and the 2-dog-bone-pattern hole (804) of the second conductive layer are formed from a common pattern.

## Patentansprüche

1. Eine Vorrichtung, aufweisend:
einen mit zwei Anschlüssen versehenen Mehrschicht-Keramikkondensator (Multilayer Ceramic Capacitor bzw. MLCC) (600), aufweisend:
wenigstens eine erste leitende Schicht (611), die mit einem ersten Anschluss (610) assoziiert ist,
wenigstens eine zweite leitende Schicht (621), die mit einem zweiten Anschluss (620) assoziiert ist, und
eine isolierende Schicht (631), die eine erste leitende Schicht und eine zweite leitende Schicht (621) voneinander trennt,
**dadurch gekennzeichnet, dass** die ersten leitenden Schichten (611) und die zweiten leitenden Schichten (622) ein Loch (804) mit einem Zwei-Hundeknochen-Muster enthalten, wobei das Loch (804) mit dem Zwei-Hundeknochen-Muster durch zwei erste Schlitze, die senkrecht zu einer Stromflussrichtung des mit zwei Anschlüssen versehenen MLCC sind, und zwei zweite Schlitze, die parallel zu der Stromflussrichtung sind, gebildet wird, wobei die zwei zweiten Schlitze zwischen den zwei ersten Schlitzen angeordnet sind und ihre Enden die entsprechenden ersten Schlitze verbinden.

2. Vorrichtung nach Anspruch 1, wobei der mit zwei Anschlüssen versehene MLCC (600) einen einzelnen positiven Anschluss (610) und einen einzelnen negativen Anschluss (620) aufweist.

3. Vorrichtung nach Anspruch 1, wobei das Loch (804) mit dem Zwei-Hundeknochen-Muster der ersten leitenden Schicht (611) einen Serienersatzwiderstand (Equivalent Series Resistance bzw. ESR) des mit zwei Anschlüssen versehenen MLCC (600) im Vergleich zu einer leitenden Schicht ohne ein Loch (804) mit einem Zwei-Hundeknochen-Muster vermindert.

4. Vorrichtung nach Anspruch 3, wobei die Verminderung des ESR des mit zwei Anschlüssen versehenen MLCC (600) einen Qualitätsfaktor (Q-Faktor) des mit zwei Anschlüssen versehenen MLCC (600) vergrößert.

5. Vorrichtung nach Anspruch 1, wobei das Loch (804) mit dem Zwei-Hundeknochen-Muster über weniger als die vollständige Länge der leitenden Schicht (611, 621) hinweg ausgebildet ist.

6. Ein Verfahren, aufweisend:
Ausbilden einer ersten leitenden Schicht in Entsprechung zu einem ersten Anschluss eines mit zwei Anschlüssen versehenen Mehrschicht-Keramikkondensators (Multilayer Ceramic Capacitor bzw. MLCC) (600), wobei die erste leitende Schicht ein Loch (804) mit einem Zwei-Hundeknochen-Muster gemäß Anspruch 1 enthält,
Ausbilden einer ersten isolierenden Schicht (631) über der ersten leitenden Schicht, wobei eine erste Seite der ersten isolierenden Schicht (631) der ersten leitenden Schicht benachbart ist,
Ausbilden einer zweiten leitenden Schicht in Entsprechung zu einem zweiten Anschluss des mit zwei Anschlüssen versehenen MLCC (600) über der ersten isolierenden Schicht (631), wobei die zweite leitende Schicht ein Loch (804) mit einem Zwei-Hundeknochen-Muster gemäß Anspruch 1 enthält und wobei eine der ersten Seite gegenüberliegende zweite Seite der ersten Isolationsschicht (631) der zweiten leitenden Schicht benachbart ist.

7. Verfahren nach Anspruch 6, wobei das Loch (804) mit dem Zwei-Hundeknochen-Muster der ersten leitenden Schicht und das Loch (804) mit dem Zwei-Hundeknochen-Muster der zweiten leitenden Schicht aus einem gemeinsamen Muster ausgebildet sind.

## Revendications

1. Appareil comprenant :
un condensateur céramique multicouche à deux bornes, MLCC (600), comprenant :
au moins une première couche conductrice (611) associée à une première borne (610) ;
au moins une deuxième couche conductrice (621) associée à une seconde borne (620) ; et
une couche isolante (631) séparant une première couche conductrice et une deuxième couche conductrice (621) ;
**caractérisé en ce que** les premières couches conductrices (611) et les deuxièmes couches conductrices (622) comportent un trou en forme de double os (804), le trou en forme de double os (804) étant formé par deux premières fentes perpendiculaires à un sens de flux de courant du MLCC à deux bornes, et deux secondes fentes parallèles au sens de flux de courant, les deux secondes fentes étant agencées entre les deux premières fentes et leurs extrémités connectant les premières fentes respectives.

2. Appareil selon la revendication 1, dans lequel le MLCC à deux bornes (600) comporte une borne positive unique (610) et une borne négative unique (620).

3. Appareil selon la revendication 1, dans lequel le trou en forme de double os (804) de la première couche conductrice (611) réduit une résistance série équivalente, ESR, du MLCC à deux bornes (600) en comparaison à une couche conductrice ne comportant pas le trou en forme de double os (804).

4. Appareil selon la revendication 3, dans lequel la réduction de l'ESR du MLCC à deux bornes (600) augmente un facteur de qualité, facteur Q, du MLCC à deux bornes (600).

5. Appareil selon la revendication 1, dans lequel le trou en forme de double os (804) est découpé en travers de moins d'une totalité d'une longueur de la couche conductrice (611, 621).

6. Procédé comprenant :
la formation d'une première couche conductrice correspondant à une première borne d'un condensateur céramique multicouche à deux bornes, MLCC (600), la première couche conductrice comportant un trou en forme de double os (804) selon la revendication 1 ;
la formation d'une première couche isolante (631) au-dessus de la première couche conductrice, un premier côté de la première couche isolante (631) étant adjacent à la première couche conductrice ;
la formation d'une seconde couche conductrice correspondant à une seconde borne du MLCC à deux bornes (600) au-dessus de la première couche isolante (631), la seconde couche conductrice comportant un trou en forme de double os (804) selon la revendication 1, et un second côté de la première couche isolante (631) qui est opposé au premier côté étant adjacent à la seconde couche conductrice.

7. Procédé selon la revendication 6, dans lequel le trou en forme de double os (804) de la première couche conductrice et le trou en forme de double os (804) de la seconde couche conductrice sont formés à partir d'un motif commun.
